(19) Europäisches Patentamt
European Patent Office
Office européen des brevets

(11) **EP 4 262 310 A1**

(12) **EUROPEAN PATENT APPLICATION**
published in accordance with Art. 153(4) EPC

(43) Date of publication:
**18.10.2023 Bulletin 2023/42**

(21) Application number: **20967414.2**

(22) Date of filing: **29.12.2020**

(51) International Patent Classification (IPC):
***H04W 72/10*** ***(2009.01)***

(52) Cooperative Patent Classification (CPC):
**H04W 72/56**

(86) International application number:
**PCT/CN2020/140905**

(87) International publication number:
**WO 2022/141066 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **LI, Nijun**
**Shenzhen, Guangdong 518129 (CN)**
• **WU, Kedi**
**Shenzhen, Guangdong 518129 (CN)**
• **WU, Jian**
**Shenzhen, Guangdong 518129 (CN)**
• **LIAO, Shuri**
**Shenzhen, Guangdong 518129 (CN)**

(74) Representative: **Maiwald GmbH**
**Engineering**
**Elisenhof**
**Elisenstrasse 3**
**80335 München (DE)**

(54) **DATA TRANSMISSION METHOD AND APPARATUS**

(57) Embodiments of this application provide a data transmission method and apparatus. The method includes: A transmit device calculates an original priority of proportional-fair PF scheduling of a target logical channel; the transmit device calculates a priority modification factor of the target logical channel based on whether a first packet in a current minimum effective transmission unit METU that is being sent on the target logical channel has left a buffer queue; the transmit device performs weighting on the original priority of the target logical channel by using the priority modification factor, to obtain a modified priority of the target logical channel; and the transmit device schedules the target logical channel based on the modified priority. The data transmission method according to embodiments of this application may be used, for example, in a cloud VR service scenario in which HEVC coding is used, and weighting is performed on a logical channel for transmitting cloud VR service data, to accelerate a transmission speed of the cloud VR service data, thereby improving integrity of cloud VR data transmission when an extremely low air interface delay requirement is met.

FIG. 7

## Description

## TECHNICAL FIELD

This application relates to the field of wireless communication technologies, and in particular, to a data transmission method and apparatus.

## BACKGROUND

With development of a 5th generation mobile communication technology (5th generation mobile networks, 5G), cloud virtual reality (cloud virtual reality, Cloud VR) may become one of enhanced mobile broadband (enhanced mobile broadband, eMBB) services favored by many 5G operators in the future.

However, a higher source rate, an extremely strict requirement on data integrity, and an extremely low air interface delay requirement of the cloud VR bring great transmission pressure to 5G new radio (new radio, NR). For example, for implementing immersive experience, it needs to be ensured that a typical delay constraint of unidirectional air interface transmission of the cloud VR is 10 ms. Currently, a typical source rate of downlink cloud VR is 30 MHz to 50 MHz. Under the delay constraint of 10 ms, only about five cloud VR services can be guaranteed to achieve acceptable QoS (quality of service, QoS) in an NR cell with a bandwidth of 100 MHz.

Therefore, a capacity of an NR system becomes a bottleneck that restricts a scale of the cloud VR. When the capacity of the NR system is not abundant, it is difficult to ensure that a requirement on integrity of cloud VR data transmission is met with an extremely low air interface delay requirement.

## SUMMARY

Embodiments of this application provide a data transmission method and apparatus, to improve integrity of cloud VR data transmission when an extremely low air interface delay requirement is met.

According to a first aspect, an embodiment of this application provides a data transmission method. The method includes: calculating, by a transmit device, an original priority of proportional-fair PF scheduling of a target logical channel, where the target logical channel includes a logical channel on which the transmit device sends target service data to a receiving device; calculating, by the transmit device, a priority modification factor of the target logical channel based on whether a first packet in a current minimum effective transmission unit METU that is being sent on the target logical channel has left a buffer queue; performing weighting, by the transmit device, on the original priority of the target logical channel by using the priority modification factor, to obtain a modified priority of the target logical channel; and scheduling, by the transmit device, the target logical channel based on the modified priority.

The data transmission method according to this embodiment of this application may be used, for example, in a cloud VR service scenario in which HEVC coding is used. The transmit device may perform weighting on the original priority of the target logical channel according to a sending status of the first packet in the METU on the target logical channel, and modify the original priority. In this way, a transmission speed of the current METU is accelerated, time urgency of the current METU transmission is reduced, and integrity of cloud VR data transmission is improved.

In an optional implementation, the calculating, by a transmit device, an original priority of proportional-fair PF scheduling of a target logical channel includes: determining, by the transmit device, whether a packet loss occurs in the current METU; and if the packet loss occurs in the current METU, discarding, by the transmit device, a packet that is not sent in the current METU, and still determining whether a packet loss occurs in a next METU; or if no packet loss occurs in the current METU, calculating, by the transmit device, the original priority. In this way, the transmit device can actively discard, remaining packets that are not sent in the METU when the packet loss already occurs in the current METU sent to the receiving device, thereby reducing invalid data transmission, saving air interface resources, and improving bandwidth utilization.

In an optional implementation, the target service data includes video data, and the METU includes an image frame of the video data, an independent slice slice of the image frame, or an independent tile tile of the image frame. Therefore, the transmit device may implement transmission scheduling of the cloud VR data at different granularities according to different granularities of METUs.

In an optional implementation, the calculating, by the transmit device, a priority modification factor of the target logical channel based on whether a first packet in a current METU that is being sent on the target logical channel has left a buffer queue includes: determining, by the transmit device, whether the first packet in the current METU has left the buffer queue; and if the first packet in the current METU does not leave the buffer queue, calculating, by the transmit device, a first-priority modification factor corresponding to the target logical channel when the first packet in the current METU does not leave the buffer queue; or if the first packet in the current METU has left the buffer queue, calculating, by the transmit device, a second-priority modification factor corresponding to the target logical channel when the first packet in the current METU has left the buffer queue. Therefore, the transmit device may generate different priority modification factors according to scheduling statuses of the first packet in the current METU, so that different scheduling priorities are used for the target logical channel corresponding to different scheduling statuses of the first packet in the current METU.

In an optional implementation, the calculating, by the transmit device, a first-priority modification factor corresponding to the target logical channel when the first packet in the current METU does not leave the buffer queue includes: calculating, by the transmit device, a waiting time factor of the current METU, where the waiting time factor is obtained according to the following formula:

$$ W = \frac{(t_n - t_{in})}{T} $$

$W$ is the waiting time factor, $t_n$ is a current moment, $t_{in}$ is a moment at which the first packet in the current METU enters a sending buffer of the target logical channel, and $T$ is a delay constraint of air interface transmission between the transmit device and the receiving device; and determining, by the transmit device, the first-priority modification factor based on the waiting time factor. Therefore, the waiting time factor can reflect time urgency of the current METU transmission. Therefore, the first-priority modification factor may be a modification factor based on time urgency scheduling.

In an optional implementation, the first-priority factor is monotonically increasing or monotonically non-decreasing relative to the waiting time factor, and the first-priority modification factor is greater than or equal to 1.

In an optional implementation, the calculating, by the transmit device, a second-priority modification factor corresponding to the target logical channel when the first packet in the current METU has left the buffer queue includes: calculating, by the transmit device, a transmission rate of the current METU; calculating, by the transmit device, a transmission time factor of the current METU, where the transmission time factor is obtained according to the following formula:

$$ R = \frac{(T_w + T_S + C_n/S)}{T} $$

$R$ is a transmission time factor, $T_w$ is a transmission waiting time of the current METU, $T_S$ is a transmission time of the current METU, $C_n$ is an amount of data that is not transmitted in the current METU, $S$ is the transmission rate of the current METU, and $T$ is a delay constraint of air interface transmission between the transmit device and the receiving device; and determining, by the transmit device, the second-priority modification factor based on the transmission time factor. Therefore, the transmission time factor can reflect time urgency of the current METU transmission. Therefore, the second-priority modification factor may be a modification factor based on time urgency scheduling.

In an optional implementation, the second-priority factor is monotonically increasing or monotonically non-decreasing relative to the transmission time factor, and the second-priority modification factor is greater than or equal to 1.

In an optional implementation, the target service data includes type 1 data and type 2 data, importance of the type 1 data is higher than that of the type 2 data, and the target logical channel includes a logical channel for transmitting the type 1 data and a logical channel for transmitting the type 2 data; and the performing weighting, by the transmit device, on the original priority of the target logical channel by using the priority modification factor, to obtain a modified priority of the target logical channel includes: multiplying, by the transmit device, the original priority by the first-priority modification factor or the second-priority modification factor corresponding to the target logical channel, and adding an offset factor, to obtain a modified priority of the logical channel for transmitting the type 1 data. Therefore, the transmit device may set different priorities for different logical channels according to different data importance.

In an optional implementation, the method further includes: determining, by the transmit device, whether the transmission time factor is greater than a preset threshold; and if the transmission time factor is less than or equal to the threshold, multiplying, by the transmit device, the original priority by the first-priority modification factor or the second-priority modification factor corresponding to the target logical channel, to obtain a modified priority of the logical channel for transmitting the type 2 data. In this way, the transmit device can accelerate transmission of the relatively unimportant data when time urgency of relatively unimportant data transmission is not high, thereby improving integrity of data transmission.

In an optional implementation, the method further includes: if the transmission time factor is greater than the threshold, discarding, by the transmit device, a packet that is not transmitted in the current METU. In this way, the transmit device may discard the relatively unimportant data when time urgency of relatively unimportant data transmission is high, thereby improving transmission integrity of the relatively important data.

According to a second aspect, an embodiment of this application provides a data transmission apparatus. The data transmission apparatus has a function of implementing a behavior of the foregoing transmit device. The function may be implemented by hardware, or may be implemented by hardware executing corresponding software. The hardware or software includes one or more unit and modules corresponding to the foregoing functions. In a possible design, the data transmission apparatus includes a processor and a memory. The memory includes a program instruction, and when the program instruction is run by the processor, the transmit device is enabled to perform the following method steps: calculating an original priority of proportional-fair PF scheduling of a target logical channel, where the target logical channel includes a logical channel on which the transmit device sends target service data to a receiving device; calculating a priority modification factor of the target logical channel based on whether a first packet in a current minimum effective transmission unit METU that is being sent on the target logical channel has left a buffer queue; performing weighting on the original priority of the target logical channel by using the priority modification factor, to obtain a modified priority of the target logical channel; and scheduling the target logical channel based on the modified priority.

According to a third aspect, this application further provides a network device. The network device includes: a memory and a processor, and the memory is coupled to the processor. The memory is configured to store computer program code, the computer program code includes a computer instruction, and when the processor executes the computer instruction, the network device is enabled to perform the method in the foregoing aspects and the implementations of the foregoing aspects.

According to a fourth aspect, this application further provides a computer storage medium. The computer storage medium stores a computer instruction. When the computer instruction runs on a network device, the network device is enabled to perform the method in the foregoing aspects and the implementations of the foregoing aspects.

According to a fifth aspect, this application further provides a computer program product including an instruction. When the computer program product runs on a computer, the computer is enabled to perform the method in the foregoing aspects and the implementations of the foregoing aspects.

According to a sixth aspect, this application further provides a chip system. The chip system includes a processor, configured to support the foregoing apparatus or device in implementing functions in the foregoing aspects and implementations of the foregoing aspects, for example, generating or processing information in the foregoing method.

**BRIEF DESCRIPTION OF DRAWINGS**

FIG. 1 is an architectural diagram of an air interface-based data transmission system according to an embodiment of this application;

FIG. 2 is a schematic structural diagram of a first device according to an embodiment of this application;

FIG. 3 is a schematic structural diagram of a second device according to an embodiment of this application;

FIG. 4 is a scenario diagram of downlink transmission of a cloud VR service according to an embodiment of this application;

FIG. 5 is a schematic diagram of a quantity of logical channels required for encoding a cloud VR service in HEVC and SHVC formats;

FIG. 6 is a schematic diagram of a possible case of an METU in actual transmission in a PF scheduling mechanism;

FIG. 7 is a flowchart of a data transmission method according to Embodiment 1 of this application;

FIG. 8 is a schematic diagram of immediate scheduling and waiting scheduling of a first packet in an METU;

FIG. 9 is a flowchart of step S104 of a data transmission method according to an embodiment of this application;

FIG. 10 is a diagram of a relationship between a first-priority modification factor $f_1(W)$ and a waiting time factor W according to an embodiment of this application;

FIG. 11 is a schematic diagram of descriptions of a meaning of a parameter according to an embodiment of this application;

FIG. 12 is a diagram of a relationship between a second-priority modification factor $f_2(R)$ and a transmission time factor R according to an embodiment of this application;

FIG. 13 is a diagram of a simulation result according to Embodiment 1 of this application;

FIG. 14A and FIG. 14B are a flowchart of a data transmission method according to Embodiment 2 of this application;

FIG. 15 is a diagram of a simulation result according to Embodiment 2 of this application;

FIG. 16 is a schematic structural diagram of a data transmission apparatus according to an embodiment of this application; and

FIG. 17 is a schematic structural diagram of another data transmission apparatus according to an embodiment of this application.

**DESCRIPTION OF EMBODIMENTS**

The 5th generation mobile communication technology (5th generation mobile networks, 5G) allows an operator to provide more diversified services by virtue of its faster speed, lower delay, and more connections. Cloud virtual reality cloud VR (including cloud extended reality Cloud XR, cloud augmented reality Cloud AR, and cloud mixed reality Cloud MR). It may become one of enhanced mobile broadband (enhanced mobile broadband, eMBB) services favored by many 5G operators in the future. cloud VR incorporates cloud computing and cloud rendering into VR services. With fast and stable networks, a cloud-based display output and an audio output are coded, compressed, and transmitted to user equipment, to implement cloud-based VR service content and content rendering.

However, a higher source rate and an extremely low air interface delay requirement of the cloud VR bring great pressure to 5GNR. For implementing immersive experience, it needs to be ensured that an end-to-end loopback response delay does not exceed 70 ms, and a typical delay constraint of unidirectional air interface transmission of the cloud VR is 10 ms. Currently, a typical source rate of downlink cloud VR is 30 MHz to 50 MHz. Under the 10 ms delay constraint, only about five cloud VR services can be guaranteed to achieve acceptable QoS in an NR cell with a bandwidth of 100 MHz. Therefore, a capacity of an NR system becomes a bottleneck that restricts scale of the cloud VR.

To increase the capacity of the NR system, currently, proportional-fair (proportionally-fair, PF) scheduling is used in NR. During PF scheduling, a scheduler on a transmit end (for example, a base station) of data calculates a proportional-fair factor for each user according to a current amount of transmitted data of the user, a historical throughput feature, and a QoS class identifier (QoS class identifier, QCI), and schedules data flows of each user in sequence according to a value of the proportional-fair factor. The PF scheduling aims to ensure fairness among users and a throughput rate of the NR system. In addition, for video transmission used by the cloud VR in the NR system, technologies such as hybrid automatic repeat request (hybrid automatic repeat request, HARQ) and higher-layer forward error correction (forward error correction, FEC) are usually used, to ensure data integrity at a frame level.

To reduce damage caused by a transmission error to quality of a to-be-decoded image, H.265 high efficiency video coding (high efficiency video coding, HEVC) or scalable HEVC (scalability extension of HEVC, SHVC) is used in the cloud VR as one of the most commonly used video coding and decoding standards. In the HEVC, an image is divided into several independent slice coding parts, and each independent slice coding part may be referred to as a slice, so that a decoder can independently parse and decode these slices, to reduce damage caused by a transmission error to quality of a to-be-decoded image. In addition, an optional tile division is introduced in the HEVC. An image frame is divided into a plurality of rectangular areas with horizontal and vertical boundaries, and each rectangular area is a tile, also an independent coding unit. On the basis of the HEVC, spatial hierarchical coding or quality hierarchical coding is used in the SHVC. A coding layer of the SHVC may include a base layer (base layer, BL) and an enhancement layer (enhancement layer, EL), where the base layer encodes an image with a part of low quality, and few bandwidth resources are occupied. The enhancement layer starts from the base layer and encodes additional information of the image, so that a high-quality image is reconstructed during the decoding, which occupies more bandwidth resources. In this case, acceptable QoS can be achieved in the NR only if data transmission at the basic layer is guaranteed. If data transmission at the enhancement layer can be guaranteed, superior QoS can be achieved. In principle, instantaneous fluctuation of channel quality can be better avoided in the hierarchical coding.

According to the PF scheduling solution used in the NR and the H.265 HEVC/SHVC coding and decoding solution used in the cloud VR, there are many limitations of the NR on carrying cloud VR services. As a result, integrity of cloud VR data transmission cannot be ensured.

From the perspective of an air interface: (1) cloud VR has requirements on integrity and a delay of data in air interface transmission. However, in current PF scheduling, a throughput rate needs to be maximized at a physical layer, and data integrity and delay constraints are not considered. However, QoS based on the maximum throughput rate at the physical layer cannot be equal to QoS with high integrity and low delay required by the cloud VR. (2) For technologies such as HARQ retransmission and higher-layer FEC used in the NR: On the one hand, a bandwidth and a delay are increased by using these technologies, and there are limited gains for the low delay of the cloud VR. On the other hand, a "frame" is usually used as a guarantee object by using these technologies, which is large in granularity and inflexible.

From the perspective of a source: On the one hand, although H.265 supports slice/tile division to counter transmission errors, currently NR cannot sense a minimum effective transmission unit (minimal effective transmission unit, METU) in a frame/slice/tile, and therefore integrity of the METU cannot be ensured. On the other hand, although SHVC has great potential to counter instantaneous channel quality fluctuations for the cloud VR, existing protocols do not support a plurality of QoS data flows for a same service (for example, QoS data flows at the basic layer and QoS data flows at the enhancement layer cannot be configured for a cloud VR service of a same user), and SHVC is not widely used.

To resolve the foregoing technical problem and improve integrity of cloud VR data transmission, an embodiment of this application provides a data transmission method. The data transmission method according to this embodiment of this application may be used in any air interface-based data transmission scenario with a low delay and an integrity requirement.

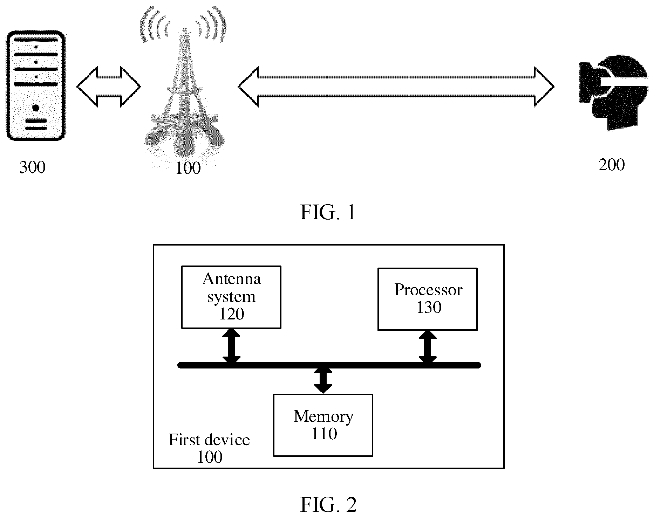

FIG. 1 is an architectural diagram of an air interface-based data transmission system according to an embodiment of this application. As shown in FIG. 1, the scenario may include a first device 100, a second device 200, and a service server 300. Data transmission is implemented between the first device 100 and the second device 200 according to an air interface protocol. The first device 100 may be a base station (for example, a 5G base station gNB, a 4G base station eNB), or a network device, for example, a wireless access point (wireless access point, WAP) device. The second device 200 may be a virtual reality/extended reality/augmented reality/mixed reality (VR/XR/AR/MR) device, for example, a VR helmet or VR glasses. The second device 200 may alternatively be another device, for example, a mobile phone, a tablet computer, a large screen display device, or another terminal device.

FIG. 2 is a schematic structural diagram of a first device according to an embodiment of this application. As shown in FIG. 2, the first device 100 may include a memory 110, an antenna system 120, and a processor 130. The memory 110, the antenna system 120, and the processor 130 are coupled and connected. The memory 110 stores a program instruction. The processor 130 may invoke the program instruction in the memory 110, so that the first device 100 performs a related method, for example, parsing a packet, generating a packet, and sending and receiving data by using the antenna system 120.

In this embodiment of this application, the processor 130 of the first device 100 may include one or more processing units, for example, a system on a chip (system on a chip, SoC), a central processing unit (central processing unit, CPU), a microcontroller (microcontroller, MCU), or a storage controller. Different processing units may be independent components, or may be integrated into one or more processors.

In this embodiment of this application, the memory of the first device 100 may include one or more storage units, for example, may include a volatile memory (volatile memory), for example: a dynamic random access memory (DRAM), or a static random access memory (SRAM), and may further include a non-volatile memory (non-volatile memory, NVM), for example: a read-only memory (read-only memory, ROM), flash memory (flash memory), or the like. Different storage units may be independent components, or may be integrated or encapsulated in one or more processors or the antenna system 120, and become a part of the processor or the antenna system 120.

In this embodiment of this application, the antenna system 120 of the first device 100 is mainly configured to send and receive a signal, to implement data transmission between the first device 100 and the second device.

It may be understood that the structure shown in this embodiment of this application does not constitute a specific limitation on the first device 100. In some embodiments of this application, the first device 100 may include more or fewer components than those shown in the figure, or some components may be combined, or some components may be split, or different component arrangements may be used. For example, when the first device 100 is a base station, a plurality of memories 110 and the processor 130 of the first device 100 may be distributed in a baseband processing unit (base band unit, BBU) and a radio processing unit (radio processing unit, RRU) of the base station.

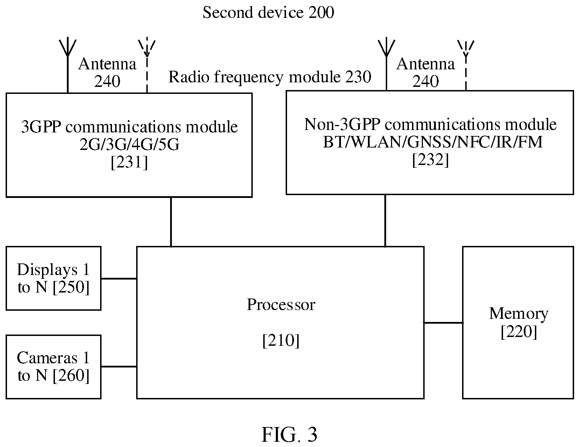

FIG. 3 is a schematic structural diagram of a second device according to an embodiment of this application. As shown in FIG. 3, the second device 200 may include a processor 210, a memory 220, an antenna 240, and the like.

In some embodiments, the processor 210 may include one or more processing units. For example, the processor 210 may include an application processor (application processor, AP), a graphics processing unit (graphics processing unit, GPU), an image signal processor (image signal processor, ISP), a video codec, a digital signal processor (digital signal processor, DSP), a neural-network processing unit (neural-network processing unit, NPU), and/or the like. Different processing units may be independent components, or may be integrated into one or more processors, for example, integrated into a system on a chip (system on a chip, SoC). The memory may be further disposed in the processor 210, and is configured to store instructions and data. In some embodiments, the memory in the processor 210 is a cache. The memory may store instructions or data just used or cyclically used by the processor 210.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The memory 220 may be configured to store computer-executable program code, and the executable program code includes instructions. The memory 220 may include one or more storage units, for example, may include a volatile memory (volatile memory), for example: a dynamic random access memory (DRAM), or a static random access memory (SRAM), and may further include a non-volatile memory (non-volatile memory, NVM), for example: a read-only memory (read-only memory, ROM), flash memory (flash memory), or the like. The processor 210 executes various functional applications and data processing of the second device 200 by running the instruction stored in the memory 220 and/or the instruction stored in the memory disposed in the processor.

A wireless communication function of the second device 200 may be implemented by using a radio frequency module 230. The radio frequency module 230 may be separately disposed, or may be implemented by using the processor 210.

In some embodiments, the radio frequency module 230 may include a 3GPP communications module 231 and a non-3GPP communications module 232. The 3GPP communications module 231 may provide a cellular communication solution that is applied to the second device 200 and that includes 2G/3G/4G/5G or the like. In some embodiments, at least a part of functional modules of the 3GPP communications module 231 may be disposed in the processor 210. In some embodiments, at least some function modules of the 3GPP communications module 231 and at least some modules of the processor 210 may be disposed in a same component.

The non-3GPP communications module 232 may include a Wi-Fi module, a Bluetooth (bluetooth, BT) module, a global navigation satellite system (global navigation satellite system, GNSS) module, a near field communication (near field communication, NFC) module, an infrared (infrared, IR) module, etc. The non-3GPP communications module 232 may be one or more components integrated with the foregoing at least one module.

For example, a wireless communication function of the second device 200 may include a function of a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), fifth generation mobile communication technology new radio (5th generation mobile networks new radio, 5G NR), BT, GNSS, WLAN, NFC, FM, and/or IR. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite-based augmentation system (satellite-based augmentation systems, SBAS).

It may be understood that the structure shown in this embodiment of this application does not constitute a specific limitation on the second device 200. In some other embodiments of this application, the second device 200 may include more or fewer components than those shown in the figure, for example, the processor 210 and the memory 220, or some components may be combined, or some components may be split, or different component arrangements may be used. The components shown in the figure may be implemented by hardware, software, or a combination of software and hardware. The second device may further include: one or more displays 250, one or more cameras 260, and the like.

Based on the first device 100 shown in FIG. 2 and the second device 200 shown in FIG. 3, air interface-based data transmission between the first device 100 and the second device 200 may include downlink transmission and uplink transmission. The downlink transmission means that the first device 100 transmits data to the second device 200. In this case, the first device 100 is a transmit device, and the second device 200 is a receiving device. Correspondingly, the uplink transmission means that the second device 200 transmits data to the first device 100. In this case, the first device 100 is a receiving device, and the second device 200 is a transmit device. The technical solutions in this embodiment of this application may be used in downlink transmission and uplink transmission. However, due to space limitations, the following describes the technical solutions in the embodiments of this application in detail by using only a downlink transmission scenario as an example. The uplink transmission scenario may be implemented with reference to the technical solutions in the downlink transmission scenario.

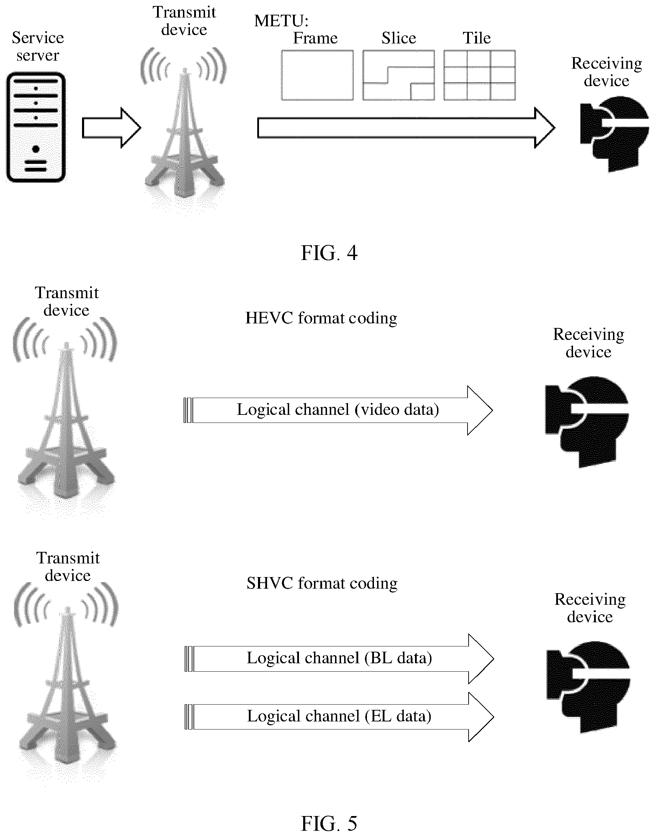

FIG. 4 is a scenario diagram of downlink transmission of a cloud VR service according to an embodiment of this application. As shown in FIG. 4, a downlink transmission scenario of a cloud VR service is used as an example. When a receiving device uses a cloud VR service, a service server of the cloud VR sends service data required by the cloud VR service to the transmit device, and then the transmit device sends the service data to the receiving device through an air interface. The transmit device sends the service data to the receiving device in a minimum effective transmission unit METU, and the transmit device needs to send the minimum effective transmission unit METU in a form of a packet corresponding to an air interface protocol. One METU may include one or more packets. For example, when the transmit device is a 5G base station gNB, and an air interface is an NR, the packet is a packet data convergence protocol (packet data convergence protocol, PDCP) packet.

Generally, a correspondence between a PDCP packet and an METU, that is, a specific METU to which any PDCP packet belongs, is known to the transmit device. The correspondence may be inferred from a service feature of the cloud VR service. For example, the transmit device may determine, as data of a same METU, PDCP packets that arrive in a centralized manner within a periodicity of image frames. Alternatively, the correspondence may be indicated in a header enhancement manner. For example, the transmit device may write an METU number corresponding to the PDCP packet into a header of the PDCP packet.

Further, for example, the cloud VR service transmits H.265 video data. According to a feature of H.265 video compression coding, each network abstraction layer (network abstraction layer, NAL) unit generated by encoding by an encoder of a service server is one METU. Granularities of the NAL unit (that is, granularities of the METU) vary with configurations of the encoder. For example, when the encoder uses the HEVC/SHVC format for encoding, the granularity of the NAL unit may be an image frame. In other words, each image frame corresponds to one METU. Alternatively, the granularity of the NAL unit may be a slice. In other words, each slice corresponds to one METU. The granularity of the NAL unit may alternatively be a tile. In other words, each title corresponds to one METU.

FIG. 5 is a schematic diagram of a quantity of logical channels required for encoding a cloud VR service in HEVC and SHVC formats. As shown in FIG. 5, to send service data to a receiving device, a transmit device may allocate one or more logical channels to the service data, and transmit the service data on the logical channel. A cloud VR service is used as an example. According to different configurations of an encoder, video data sent by the transmit device to the receiving device may be transmitted on the one or more logical channels. For example, when the encoder uses the HEVC format for encoding, because the video data does not be encoded in spatial layering or quality layering and only one layer of data is included, the video data may be transmitted on one logical channel. For another example, when the encoder uses the SHVC format for encoding, because the video data is encoded in spatial layering or quality layering, the video data may include base layer BL data and enhancement layer EL data, and therefore the video data may be transmitted on two logical channels. The base layer BL data is transmitted on one logical channel, and the enhancement layer EL data is transmitted on another logical channel.

To ensure quality of a cloud VR service, the cloud VR service requires that unidirectional air interface transmission meets a delay constraint, and a typical value of the delay constraint is, for example, 10 ms. This means that when the transmit device sends the METU to the receiving device, it is required that packets in each METU can all be sent within a delay constraint and that all packets in each METU can be correctly received by the receiving device. Only in this way, requirements on the integrity of data transmission of cloud VR services under delay constraints can be met.

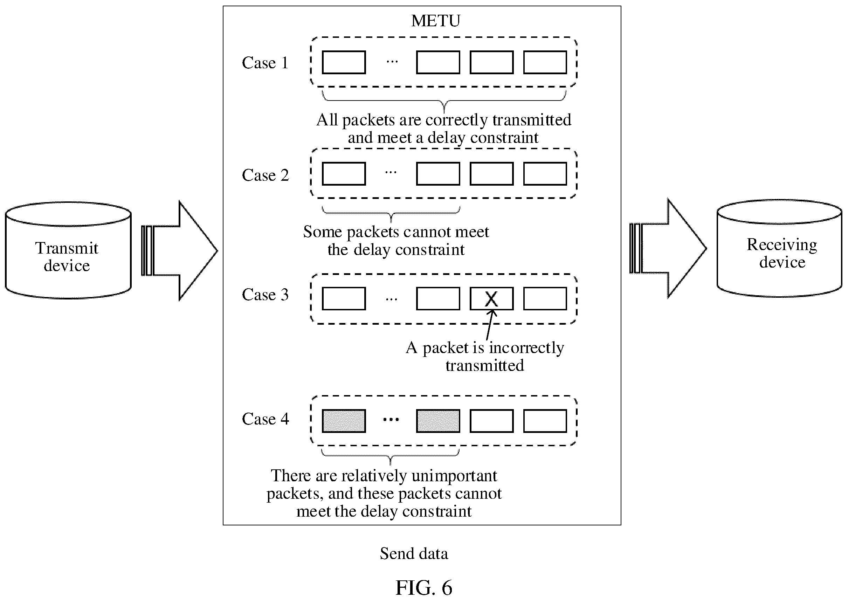

However, as shown in FIG. 6, in a current PF scheduling mechanism, because an integrity constraint and a delay constraint of data are not considered, the following general cases may occur in actual transmission of the METU.

Case 1: All packets in the METU can be correctly transmitted, and all packets can be transmitted to meet a delay constraint.

Case 2: All packets in the METU can be correctly transmitted, but some packets cannot meet the delay constraint.

Case 3: A packet is incorrectly transmitted in the METU, for example, a maximum quantity of retransmissions is reached.

Case 4: All packets in the METU can be correctly transmitted, but there are relatively unimportant packets in the METU and transmission of the packets cannot meet the delay constraint.

In the foregoing four cases, Case 1 is an ideal case for transmission of the METU, and data transmission integrity may be affected in Case 2 to Case 4, resulting in deterioration of the quality of the cloud VR service.

## Embodiment 1

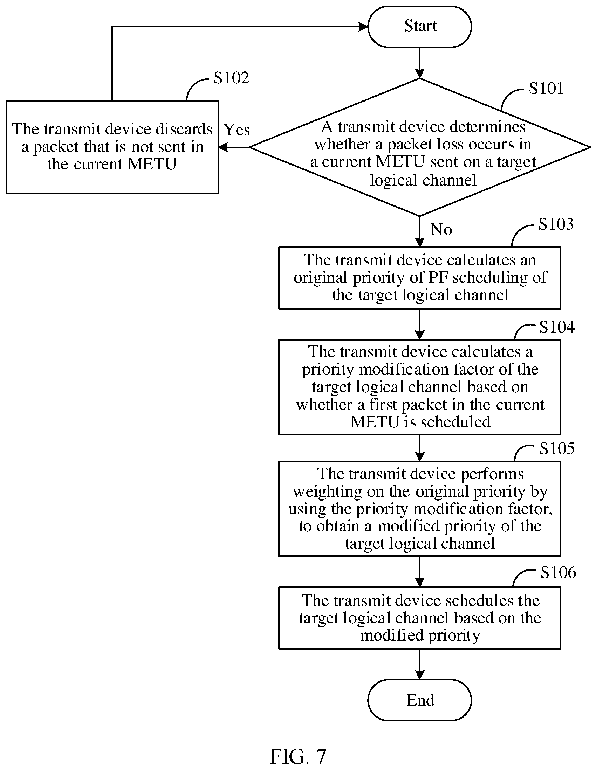

An embodiment of this application provides a data transmission method. For example, the method may be used in a cloud VR service scenario in which encoding is performed in an HEVC format, or a scenario in which another transmit device and any receiving device transmit service data on one logical channel. FIG. 7 is a flowchart of a data transmission method according to Embodiment 1 of this application. As shown in FIG. 7, the method may include the following steps S101 to S106.

Step S101: A transmit device determines whether a packet loss occurs in a current METU sent on a target logical channel.

The target logical channel is a logical channel that is established between a transmit device and a receiving device and that is used to send cloud VR data (corresponding to the target service data in the claims). Therefore, the current METU sent on the target logical channel is an METU of the cloud VR data, and the current METU refers to an METU that is currently being sent by the transmit device on the target logical channel.

In specific implementation, the transmit device may perform step S101 when scheduling is performed at the start of each slot.

A slot is a minimum unit for data scheduling in technologies such as NR and LTE. One radio frame in a signal in the NR or LTE includes a plurality of subframes, one subframe includes a plurality of slots, and one slot includes a plurality of orthogonal frequency-division multiplexing (orthogonal frequency-division multiplexing, OFDM) symbols. The slot and a related concept can be found in the prior art in the fields such as NR and LTE, and details are not described herein again.

In specific implementation, the transmit device may determine, based on whether a negative-acknowledgment (negative-acknowledgment, NACK) message fed back by the receiving device is received, whether the packet loss occurs in the current METU. For example, in an air interface technology in which HARQ is used, for any packet sent by the transmit device to the receiving device, if the receiving device can correctly decode the packet, it indicates that the packet is correctly sent. In this case, the receiving device feeds back an acknowledgment (acknowledgment, ACK) message to the transmit device, to notify the transmit device that the packet does not need to be resent. If the receiving device cannot correctly decode the packet, it indicates that the packet is incorrectly sent. In this case, the receiving device feeds back a NACK message to the transmit device, to notify the transmit device to resend the packet. If the transmit device still receives a NACK message after resending the packet for a preset maximum retransmission quantity, it indicates that the packet is lost, that is, a packet loss occurs in the current METU.

It should be additionally noted herein that, the foregoing manner of determining the packet loss of the METU according to the maximum retransmission quantity of the HARQ is merely an example implementation, and does not constitute a specific limitation on step S101. A person skilled in the art may further adopt another manner of determining whether the packet loss of the METU occurs. None of this goes beyond the protection scope

Step S102: If the packet loss occurs in the current METU, the transmit device discards a packet that is not sent in the current METU, and performs step S101 to prepare for scheduling a next METU.

Generally, to schedule packet transmission on each logical channel, the transmit device generally allocates a PDCP buffer corresponding to the to-be-sent buffer in the claims to each logical channel. All packets of the to-be-sent METU are put into the PDCP buffer, and sent in sequence. Therefore, the packet that has not been sent in the current METU exists in the PDCP buffer corresponding to the target logical channel.

In this case, in specific implementation of step S102, if the packet loss occurs in the current METU, the transmit device may discard all packets that belong to the current METU and that are in the PDCP buffer corresponding to the target logical channel. The discarding may be, for example, removing the packets from the PDCP buffer.

Then, the transmit device may perform step S101, and prepare to schedule a next METU when a next slot starts, and for example, determine whether a packet loss occurs in the next METU.

It may be understood that, because the packet loss already occurs in the current METU, even if all remaining packets in the current METU are correctly sent to the receiving device, transmission integrity of the METU cannot be ensured by the service, and air interface resources are wasted when the remaining packets are sent. Therefore, when determining that the packet loss has occurred in the current METU, the transmit device actively discards the packets that are not sent in the current METU, so that these packets are not sent to the receiving device, thereby reducing a waste of air interface resources. The saved air interface resources may be used to send packets in another METU, ensuring a delay constraint and integrity requirement on another METU.

Step S103: If no packet loss occurs in the current METU, the transmit device calculates an original priority of PF scheduling of the target logical channel.

It may be understood that the transmit device is not only configured to transmit cloud VR service data, but also configured to transmit other data, for example: voice data, packet data of another service, and the like. Therefore, at a same moment, the transmit device may transmit the data on a plurality of logical channels. Generally, the transmit device allocates air interface resources of each logical channel according to some scheduling algorithms, for example, round robin (round robin, RR) scheduling, maximum carrier-to-interference ratio (maximum C/I) scheduling, PF scheduling, and the like.

The PF scheduling that is the most commonly used in NR is used as an example. The transmit device calculates a priority for each logical channel including the target logical channel, and then allocates air interface resources to each logical channel according to a priority of each logical channel. A higher priority indicates more allocated air interface resources and a lower priority indicates fewer allocated air interface resources.

For ease of description, in this embodiment of this application, a priority that is of the target logical channel and that is obtained by the transmit device through calculation based on PF scheduling is referred to as an original priority.

The following describes an example of a method for calculating an original priority of a target logical channel according to the PF scheduling.

The original priority $PF_0$ of the target logical channel may be obtained through calculation according to the following formula:

$$PF_0 = \frac{T^\alpha}{R^\beta}$$

$T$ represents a current data transmission rate of the target logical channel, $R$ represents a historical average rate of the target logical channel, and $\alpha$ and $\beta$ are fairness factors. The fairness of PF scheduling may be adjusted by adjusting values of $\alpha$ and $\beta$. For example, values of $\alpha$ and $\beta$ may be 1.

Step S104: The transmit device calculates a priority modification factor of the target logical channel based on whether a first packet in the current METU is scheduled.

Generally, after receiving METU data from a service server, the transmit device may pack the METU data into one or more PDCP packets for transmission through an air interface, and then send the packets to the PDCP buffer. The packets in the PDCP buffer sequentially leave a buffer queue and are sent to the receiving device.

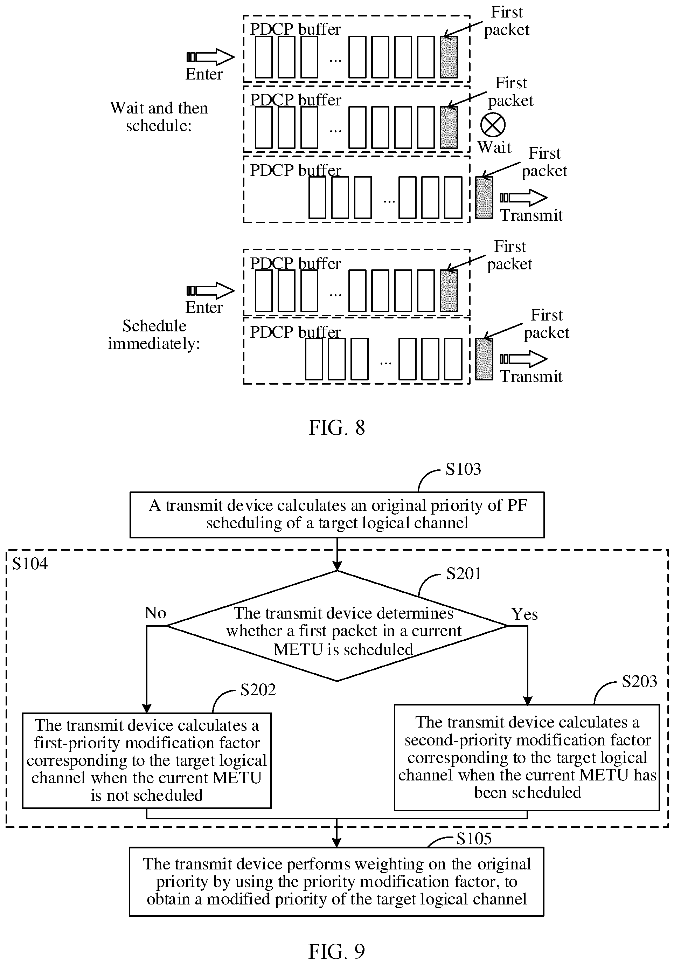

FIG. 8 is a schematic diagram of immediate scheduling and waiting scheduling of a first packet in an METU. As shown in FIG. 8, in this embodiment of this application, to improve data transmission integrity, the transmit device continuously sends packets that belong to a same METU as much as possible. In view of this, it may be understood that, according to different statuses of air interface resources allocated by the transmit device to the target logical channel, the transmit device uses different scheduling manners for the packets in the METU. For example, the scheduling may include that the packet leaves the PDCP buffer queue. For example, if the air interface resources allocated by the transmit device to the target logical channel are abundant, the first packet in one METU does not wait after entering the PDCP buffer, but directly leaves the buffer queue and is sent to the receiving device. This scheduling manner may be referred to as immediate scheduling. If the air interface resources allocated by the transmit device to the target logical channel are not abundant, the first packet in one METU may wait for a period of time after entering the PDCP buffer, and then leaves the buffer queue and is sent to the receiving device. This scheduling manner may be referred to as waiting scheduling. To be specific, the first packet in one METU is scheduled only after waiting a period of time.

Therefore, in step S104, the transmit device may estimate, based on whether the first packet in the current METU is scheduled, whether the air interface resources of the target logical channel are abundant, and correspondingly calculate a priority modification factor of the target logical channel in different manners.

FIG. 9 is a flowchart of step S104 of a data transmission method according to an embodiment of this application.

As shown in FIG. 9, in an implementation, step S104 may specifically include the following step S201 to step S203.

Step S201: The transmit device determines whether the first packet in the current METU is scheduled.

With reference to the content described in step S104, if the transmit device determines that the first packet in the current METU does not wait after entering the PDCP buffer queue, but directly leaves the buffer queue and is sent in the current METU to the receiving device, the transmit device may determine that the first packet in the current METU is not scheduled, and step S202 is performed. If the transmit device determines that the first packet in the current METU enters the PDCP buffer queue, waits for a period of time before leaving the buffer queue, and then is sent to the receiving device, the transmit device may determine that the first packet in the current METU is scheduled, and step S203 is performed.

Step S202: If the first packet in the current METU is not scheduled, the transmit device calculates a first-priority modification factor corresponding to the target logical channel when the first packet in the current METU is not scheduled.

In an implementation, step S202 may specifically include the following step S301 and step S302.

Step S301: The transmit device calculates a waiting time factor of the current METU.

In specific implementation, the waiting time factor W may be obtained through calculation according to the following formula:

$$W = \frac{(t_n - t_{in})}{T}$$

$t_n$ is a current moment, $t_{in}$ is a moment at which the first packet in the current METU enters the PDCP buffer, and $T$ is a delay constraint of air interface transmission. In a cloud VR service, a typical value of $T$ is generally 10 ms.

It may be understood that the waiting time factor W can reflect time urgency of current METU transmission. Specifically, a larger waiting time factor W indicates that time consumed by the transmit device to transmit the first packet in the current METU is longer, and a smaller time margin is left for the transmit device to transmit a remaining packet in the current METU under a delay constraint of air interface transmission. This means that transmission urgency of the current METU is higher. A smaller waiting time factor W indicates that time consumed by the transmit device to transmit the first packet in the current METU is shorter, and a longer time margin is left for the transmit device to transmit a remaining packet in the current METU under a delay constraint of air interface transmission. This means that transmission urgency of the current METU is lower.

Step S302: The transmit device determines a first-priority modification factor based on the waiting time factor.

Because the waiting time factor W reflects the time urgency of transmission of the current METU, when the time urgency is high, a transmission speed of the remaining packet in the current METU needs to be accelerated. Therefore, in this embodiment of this application, the first-priority modification factor $f_1(W)$ may be set as a monotonically increasing function relative to the waiting time factor W, or a monotonically non-decreasing function, and a larger first-priority modification factor $f_1(W)$ indicates a faster expected transmission speed of the remaining packet in the current METU.

In an implementation, the first-priority modification factor $f_1(W)$ is greater than or equal to 1, and when the first-priority modification factor $f_1(W)$ is equal to 1, it indicates that the transmission speed of the remaining packet in the current METU is not increased.

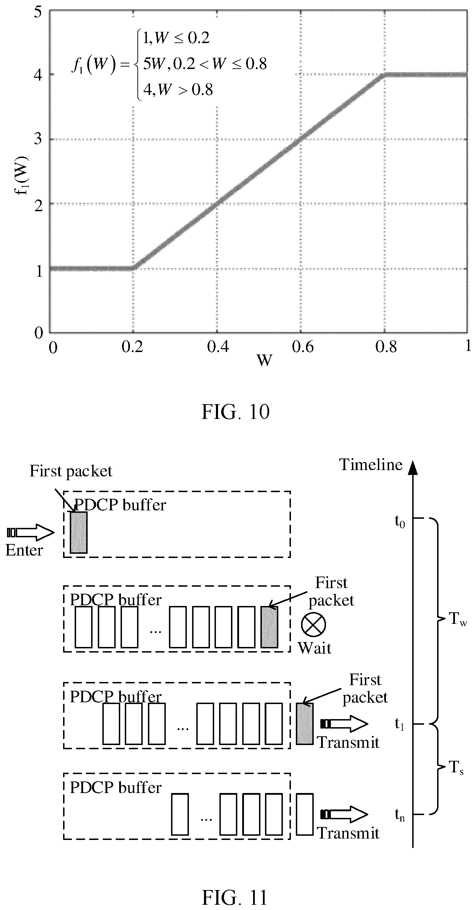

FIG. 10 is a diagram of a relationship between a first-priority modification factor $f_1(W)$ and a waiting time factor W according to an embodiment of this application.

In an implementation, as shown in FIG. 10, the first-priority modification factor $f_1(W)$ and the waiting time factor W have the following functional relationship:

$$f_1(W) = \begin{cases} 1, W \le 0.2 \\ 5 \cdot W, 0.2 < W \le 0.8 \\ 4, W > 0.8 \end{cases}$$

When $W \le 0.2$, $f_1(W) = 1$. In this case, $f_1(W)$ is a monotonic function. When $0.2 < W \le 0.8$, $f_1(W) = 5 \cdot W$. In this case, $f_1(W)$ is a monotonically increasing function. When $W > 0.8$, $f_1(W) = 4$. In this case, $f_1(W)$ is a monotonic function. Therefore, as a whole, $f_1(W)$ is a monotonically non-decreasing function relative to the waiting time factor W.

Step S203: If the first packet in the current METU has been scheduled, the transmit device calculates a second-priority modification factor corresponding to the target logical channel when the first packet in the current METU has been scheduled.

In an implementation, step S203 may specifically include the following step S401 to step S403.

Step S401: The transmit device calculates a transmission rate S of the current METU.

In specific implementation, the transmission rate S of the current METU may be calculated according to the following formula:

$$S = \frac{C_S}{T_S}$$

$C_S$ is an amount of data that has been transmitted by the current METU, and a data unit may be, for example, a bit or a byte. $T_S$ is a transmission time of the current METU.

Step S402: The transmit device calculates a transmission time factor of the current METU according to the transmission rate of the current METU.

In specific implementation, the transmission time factor R may be obtained through calculation according to the following formula:

$$R = \frac{(T_w + T_S + C_n/S)}{T}$$

$T$ is a delay constraint of air interface transmission. In a cloud VR service, a typical value of $T$ is generally 10 ms. $T_w$ is the transmission waiting time of the current METU, $T_S$ is the transmission time of the current METU, $C_n$ is an amount of data that is not transmitted in the current METU, and S is the transmission rate of the current METU.

It should be additionally noted herein that, in step S401 and step S402, parameters such as the transmission waiting time $T_w$ of the current METU and the transmission time $T_S$ of the current METU appear. To help a person skilled in the art understand meanings of the foregoing parameters, meanings of these parameters are described below with reference to FIG. 11.

As shown in FIG. 11, when the current METU is scheduled after waiting, the packet in the current METU is not immediately sent to the receiving device after entering the METU buffer on the target logical channel, but temporarily stays in the METU buffer and waits for scheduling of the transmit device. The transmit device determines, based on a current priority of the target logical channel, when to start to send the packet in the current METU to the receiving device. Therefore, there is a time difference from a moment $t_0$ at which the first packet in the current METU enters the METU buffer to a moment $t_1$ when the first packet in the current METU leaves the METU buffer and is sent, and the time difference is the transmission waiting time $T_w$ of the current METU, that is, $T_w = t_1 - t_0$. It may be further understood that there is also a time difference from the moment $t_1$ when the first packet in the current METU leaves the METU buffer and is sent to a current moment $t_n$, and the time difference is the transmission time $T_S$ of the current METU. It may be further understood that the amount of data $C_S$ that has been transmitted in the current METU is the amount of data that has been transmitted in the current METU until

the current moment $t_n$, and remaining data is an amount of data $C_n$ that has not been transmitted in the current METU.

It should be further noted that, because the data of the cloud VR service is continuously sent to the transmit device in time, when the transmission time factor R is calculated in step S402, a part of data in the current METU may not be received by the transmit device. In this case, the transmit device may not know an accurate value of the amount of data $C_n$ that is not transmitted in the current METU. Therefore, $C_n$ may be an estimated value. When specifically calculating the estimated value $C_n$, the transmit device may collect an average amount of data in the METU in a period of time as the estimated amount of data in the current METU. Then it can be learned that amount of data $C_n$ that is not transmitted in the current METU = estimated amount of data transmitted in the current METU - amount of data $C_S$ transmitted in the current METU.

It may be understood that the transmission time factor R can reflect time urgency of current METU transmission. Specifically, a larger transmission time factor R indicates that time consumed by the transmit device to transmit the first packet in the current METU is longer, and a smaller time margin is left for the transmit device to transmit a remaining packet in the current METU under a delay constraint of air interface transmission. This means that transmission urgency of the current METU is higher. A smaller transmission time factor R indicates that time consumed by the transmit device to transmit the first packet in the current METU is shorter, and a longer time margin is left for the transmit device to transmit a remaining packet in the current METU under a delay constraint of air interface transmission. This means that transmission urgency of the current METU is lower.

Step S403: The transmit device determines a second-priority modification factor based on the transmission time factor.

Because the transmission time factor R reflects the time urgency of transmission of the current METU, when the time urgency is high, a transmission speed of the remaining packet in the current METU needs to be accelerated. Therefore, in this embodiment of this application, the second-priority modification factor $f_2(R)$ may be a set as a monotonically increasing function relative to the transmission time factor R, or a monotonically non-decrementing function, and a larger second-priority modification factor $f_2(R)$ indicates a faster expected transmission speed of the remaining packet in the current METU.

In an implementation, the second-priority modification factor $f_2(R)$ is greater than or equal to 1, and when the second-priority modification factor $f_2(R)$ is equal to 1, it indicates that the transmission speed of the remaining packet in the current METU is not increased.

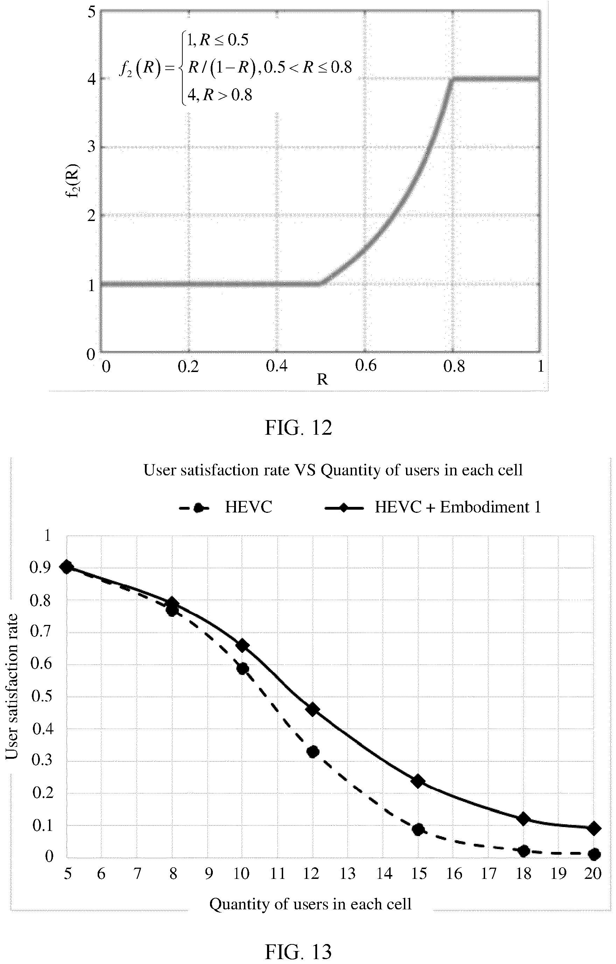

FIG. 12 is a diagram of a relationship between a second-priority modification factor $f_2(R)$ and a transmission time factor R according to an embodiment of this application,

In an implementation, as shown in FIG. 12, the second-priority modification factor $f_2(R)$ and the transmission time factor R have the following functional relationship:

$$f_2(R) = \begin{cases} 1, R \le 0.5 \\ R \cdot (1 - R), 0.5 < R \le 0.8 \\ 4, R > 0.8 \end{cases}$$

When $R \le 0.5$, $f_2(R) = 1$. In this case, $f_2(R)$ is a monotonic function. When $0.5 < R \le 0.8$, $f_2(R) = R(1 - R)$. In this case, $f_2(R)$ is a monotonically increasing function. When $R > 0.8$, $f_2(R) = 4$. In this case, $f_2(R)$ is a monotonic function. Therefore, as a whole, $f_2(R)$ is a monotonically non-decreasing function relative to the transmission time factor R.

Step S105: The transmit device performs weighting on the original priority by using the priority modification factor, to obtain a modified priority of the target logical channel.

In specific implementation, the modified priority $PF_1$ of the target logical channel may be a product of the original priority $PF_0$ and the priority modification factor, that is, $PF_1 = PF_0 \times Factor$.

When the first packet in the current METU is not scheduled, the modified priority $PF_1$ of the target logical channel may be a product of the original priority $PF_0$ and the first-priority modification factor $f_1(W)$, that is, $PF_1 = PF_0 \times f_1(W)$.

When the first packet in the current METU has been scheduled, the modified priority $PF_1$ of the target logical channel may be a product of the original priority $PF_0$ and the second-priority modification factor $f_2(R)$, that is: $PF_1 = PF_0 \times f_2(R)$.

Step S106: The transmit device schedules the target logical channel based on the modified priority.

It may be understood that, in the foregoing embodiment, because both the first-priority modification factor $f_1(W)$ and the second-priority modification factor $f_2(R)$ are greater than or equal to 1, the modified priority $PF_1$ is also greater than or equal to the original priority $PF_0$. When the modified priority $PF_1$ is also greater than the original priority $PF_0$, the transmit device may schedule more air interface resources for the target logical channel, to accelerate a transmission speed of a packet that is not transmitted in the current METU, reduce time urgency of transmission in the current METU, ensure that the packet that is not transmitted in the current METU can be transmitted within an air interface delay constraint, thereby avoiding occurrence of Case 2 and Case 3 shown in FIG. 6, and improving integrity of cloud VR data transmission.

The data transmission method according to embodiments of this application may be used, for example, in a cloud VR service scenario in which HEVC coding is used, and a combination of an active packet loss when the METU is incorrectly transmitted and time urgency scheduling is used to improve the integrity of cloud VR data transmission. Specifically, the active packet loss includes that the transmit device actively discards, remaining packets that are not sent in the METU when the packet loss already occurs in the current METU sent to the receiving device, thereby reducing invalid data transmission, saving air interface resources, and improving bandwidth utilization. The time urgency scheduling includes increasing the priority of the logical channel when a time margin of the remaining packet in the current METU transmitted by the transmit device is not abundant under the delay constraint of the air interface transmission, to increase a transmission speed of the current METU, reduce time urgency of transmission of the current METU, and improve the integrity of cloud VR data transmission.

To prove a technical effect that the method in Embodiment 1 of this application can improve the integrity of cloud VR data transmission, simulation in the method in this embodiment of this application is performed, to learn of a user satisfaction rate when the method is used in the NR and a cloud VR service scenario in which HEVC encoding is used. User satisfaction rate = Quantity of satisfied users in each cell/Quantity of users in each cell. For the HEVC encoding format, the user satisfaction rate is defined as a user whose frame error rate (frame error rate, FER) is less than 1%.

The simulation environment includes: A network topology of seven base stations and 21 cells is used, a distance between base stations is 300 m, an antenna has 64 transmit channels and 64 receive channels 64T64R, and a terminal device (that is, a receiving device) uses four transmit channels and four receive channels. A cell bandwidth is 100 MHz, a subcarrier spacing is 30 kHz, terminal devices are evenly distributed, a quantity of terminal devices in each cell ranges from 5 to 50, and a source rate is 35 Mbps.

The obtained simulation result is shown in FIG. 13. It can be learned from FIG. 13 that the user satisfaction rate decreases rapidly with an increase in users. However, according to the method in Embodiment 1 of this application, the user satisfaction rate can be significantly increased. A larger quantity of users in each cell indicates a more obvious relative gain. For example, when each cell includes 10 users, the user satisfaction rate increases from 58.8% when HEVC is not adopted in the method to 65.8%, with a relative gain of 11.9%.

**Embodiment 2**

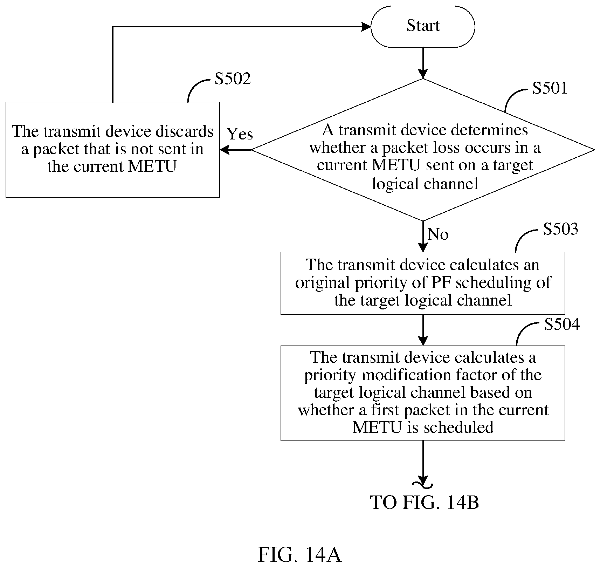

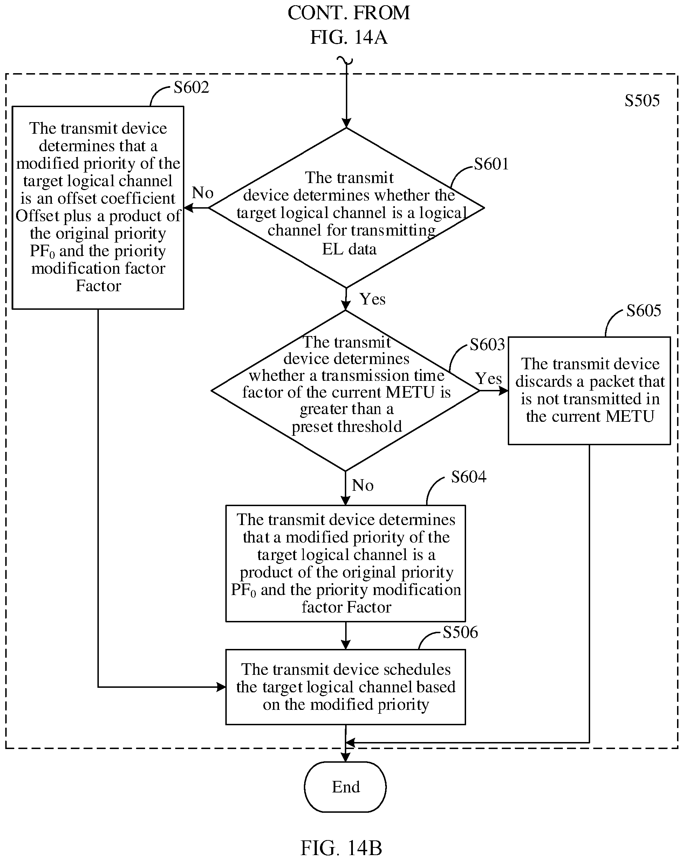

An embodiment of this application provides a data transmission method. For example, the method may be used in a cloud VR service scenario in which encoding is performed in an SHVC format, or a scenario in which another transmit device and any receiving device transmit service data on one logical channel. FIG. 14A and FIG. 14B are a flowchart of a data transmission method according to Embodiment 2 of this application. As shown in FIG. 14A and FIG. 14B, the method may include the following steps S501 to step S506.

Step S501 to step S504 are the same as step S101 to step S104 in Embodiment 1. For details, refer to step S101 to step S104. Details are not described herein again. Some differences lie in the following.

Embodiment 1 may be used in a cloud VR service scenario in which encoding is performed in an HEVC format. The transmit device and the receiving device need to transmit cloud VR service data on only one logical channel. Embodiment 2 may be used in a cloud VR service scenario in which encoding is performed in an SHVC format. The transmit device and the receiving device need to transmit BL data of the cloud VR service on one logical channel, and transmit EL data on another logical channel. Therefore, the method in Embodiment 2 may be separately implemented for data on each logical channel, and the target logical channel may be a logical channel for transmitting the BL data, or may be a logical channel for transmitting the EL data. Different logical channels have different logical channel numbers. Therefore, the transmit device may distinguish the EL data from the BL data according to the logical channel numbers.

Step S505: The transmit device performs weighting on the original priority by using the priority modification factor, to obtain a modified priority of the target logical channel.

Step S505 is the same as step S105 in the method, and the modified priority of the target logical channel is finally obtained. However, a specific implementation of step S505 is different from that of step S105. Specifically, in step S505, the transmit device may first determine whether the target logical channel is a logical channel for transmitting the BL data or a logical channel for transmitting the EL data, and then perform weighting on the original priority in different manners according to different data transmitted on the target logical channel, to obtain the modified priority of the target logical channel.

Further, as shown in FIG. 14A and FIG. 14B, in an implementation, step S505 may specifically include the following steps.

Step S601: The transmit device determines whether the target logical channel is a logical channel for transmitting EL data.

Step S602: If the target logical channel is not a logical channel for transmitting the EL data, it indicates that the target logical channel is a logical channel for transmitting the BL data, and the transmit device determines that the modified priority of the target logical channel is an offset factor Offset plus a product of the original priority $PF_0$ and a priority modification factor, that is, $PF_1 = PF_0 \times Factor + Offset$, and then step S506 is performed, to accelerate a transmission speed of the BL packet that is not transmitted in the current METU, and ensure that transmission of the BL packet that is not transmitted in the current METU can be completed within a delay constraint of an air interface.

When the first packet in the current METU is not scheduled, the modified priority $PF_1$ of the target log-

ical channel may be a product of the original priority $PF_0$ and the first-priority modification factor $f_1(W)$ plus an offset factor Offset, that is, $PF_1 = PF_0 \times f_1(W) + Offset$.

In addition, when the first packet in the current METU has been scheduled, the modified priority $PF_1$ of the target logical channel may be a product of the original priority $PF_0$ and the second-priority modification factor $f_2(R)$ plus an offset factor Offset, that is, $PF_1 = PF_0 \times f_2(R) + Offset$.

It should be additionally noted herein that in a cloud VR service scenario in which SHVC format encoding is used, the cloud VR service can achieve acceptable QoS only if the BL data can be completely transmitted. Therefore, to preferentially ensure complete transmission of the BL data, when the target logical channel is the logical channel for transmitting the BL data, the transmit device adds an offset factor Offset after multiplying the original priority $PF_0$ by the priority modification factor. Therefore, the modified priority of the target logical channel is further improved, and preferably, the modified priority of the target logical channel is the same as a priority of another logical channel that transmits the EL data.

It may be understood that, to further improve the modified priority of the target logical channel, the offset factor Offset should be a positive number, for example, 1, 2, or 3. This is not limited in this embodiment of this application.

In an implementation, the transmit end may determine a value range of the offset factor Offset according to a priority of a voice service, so that the modified priority of the target logical channel is not higher than a priority of the voice service, to ensure that a voice service with a highest priority is not affected. For example, if the priority of the voice service is $PF_2$, the offset factor Offset may be:

$$0 < \text{Offset} \leq \text{PF}_2 - \text{PF}_0 \times \text{Factor}$$

Step S603: If the target logical channel is a logical channel for transmitting the EL data, the transmit device determines whether a transmission time factor of the current METU is greater than a preset threshold.

The transmission time factor R can reflect time urgency of current METU transmission. When the transmission time factor R is relatively large, it indicates that a relatively long time has been consumed for transmission of a packet in the current METU, and transmission of a remaining packet may hardly meet a delay constraint. When the transmission time factor R is relatively small, it indicates that a relatively short time has been consumed for transmission of a packet in the current METU, and transmission of a remaining packet is more likely to meet the delay constraint. To take different scheduling measures for two cases in which the transmission time factor R is relatively large or relatively small, a threshold is set in this embodiment of this application. For example, the threshold is generally less than a delay constraint of an air interface, for example, the threshold is set to 5 ms or 6 ms. This is not specifically limited in this embodiment of this application.

Step S604: If the transmission time factor of the current METU is less than or equal to the preset threshold, the transmit device determines that the modified priority of the target logical channel is a product of the original priority $PF_0$ and the priority modification factor, that is, $PF_1 = PF_0$ x Factor.

When the transmission time factor of the current METU is less than or equal to the preset threshold, it indicates that time urgency of current METU transmission is not high. Therefore, if a transmission speed of an EL packet that is not transmitted in the METU is accelerated, transmission of the METU can meet the delay constraint of the air interface. Therefore, the transmit device uses a product of the original priority $PF_0$ and the priority modification factor as the modified priority $PF_1$ of the target logical channel, and then jumps to step S606, thereby increasing a transmission speed of an EL packet that is not transmitted in the current METU, and ensuring that the EL packet that is not transmitted in the current METU can be transmitted within the delay constraint of the air interface.

Step S605: If the transmission time factor of the current METU is greater than a preset threshold, the transmit device discards a packet that is not transmitted in the current METU.

When the transmission time factor of the current METU is less than or equal to the preset threshold, it indicates that time urgency of transmission of the current METU is relatively high. In this case, even if a transmission speed of an EL packet that is not transmitted in the METU is increased, the current METU may not meet the delay constraint of the air interface. Therefore, to avoid a waste of air interface resources, the transmit device may directly discard the EL packet that is not transmitted in the current METU, and the saved air interface resources may be used to ensure transmission of BL data, to avoid the occurrence of Case 4 shown in FIG. 6. The cloud VR service can meet acceptable QoS.

Step S506: The transmit device schedules the target logical channel based on the modified priority.

It may be understood that, in the foregoing embodiment, because both the first-priority modification factor $f_1(W)$ and the second-priority modification factor $f_2(R)$ are greater than or equal to 1, and the offset factor Offset is also greater than 0, the modified priority $PF_1$ is also greater than or equal to the original priority $PF_0$. The transmit device may schedule more air interface resources for the target logical channel, to accelerate a transmission speed of a packet that is not transmitted in the current METU, reduce time urgency of transmission in the current METU, ensure that the packet that is not transmitted in the current METU can be transmitted within an air interface delay constraint, thereby avoiding occurrence of Case 2 and Case 3 shown in FIG. 6, and improving integrity of cloud VR data transmission.

The data transmission method according to Embodiment 2 of this application may be used, for example, in a cloud VR service scenario in which SHVC encoding is used, znd a combination of an active packet loss when the METU is incorrectly transmitted, time urgency scheduling, and discarding of an unimportant EL packet is used to improve the integrity of cloud VR data transmission. Specifically, the active packet loss when the METU is incorrectly transmitted includes that the transmit device actively discards, remaining packets that are not sent in the METU when the packet loss already occurs in the current METU sent to the receiving device, thereby reducing invalid data transmission, saving air interface resources, and improving bandwidth utilization. The time urgency scheduling includes increasing the priority of the logical channel when a time margin of the remaining packet in the current METU transmitted by the transmit device is not abundant under the delay constraint of the air interface transmission, to increase a transmission speed of the current METU, reduce time urgency of transmission of the current METU, and improve the integrity of cloud VR data transmission. A manner of actively discarding an unimportant EL packet includes: when the transmission time factor of the current METU is greater than the threshold, the transmit device actively discards the EL packet that is not transmitted, and uses saved air interface resources to ensure transmission of BL data, so that the cloud VR service meets acceptable QoS.

To prove a technical effect that the method in Embodiment 2 of this application can improve the integrity of cloud VR data transmission, simulation in the method in this embodiment of this application is performed, to learn of a user satisfaction rate when the method is used in the NR and a cloud VR service scenario in which SHVC encoding is used. User satisfaction rate = Quantity of satisfied users in each cell/Total quantity of users in each cell. For the HEVC encoding format, the user satisfaction rate is defined as a user whose FER of the BL packet is 0 and FER of the EL packet is less than 50%.

The simulation environment is basically the same as the simulation environment used in Embodiment 1, and a difference lies in that, a 35 Mbps source used in Embodiment 2 includes the BL data and the EL data, where a ratio of amounts of data of the BL data to the EL data is 1:9.

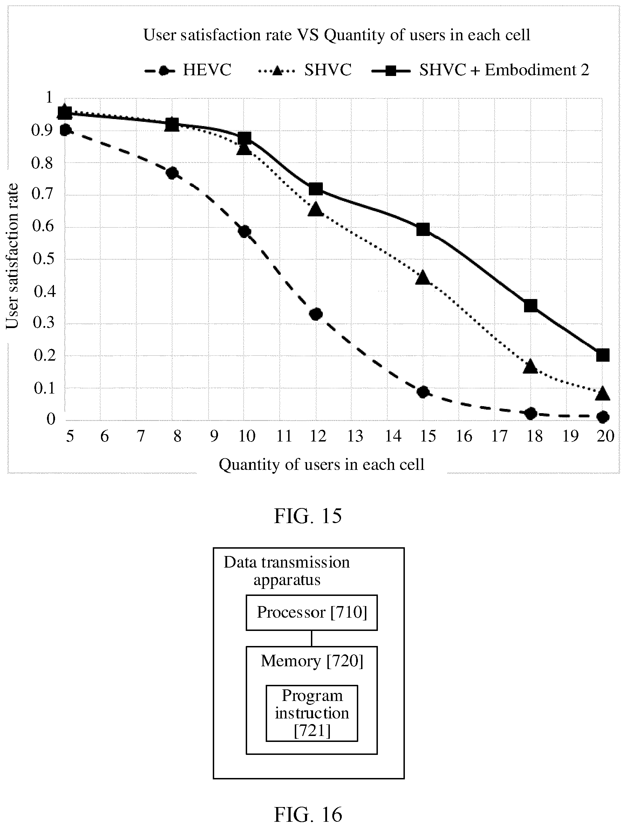

The obtained simulation result is shown in FIG. 15. It can be learned from FIG. 15 that the user satisfaction rate in the SHVC solution is much higher than that of the HEVC solution, indicating that the SHVC solution has robustness against frame loss. The method in Embodiment 2 of this application can further significantly increase the user satisfaction rate based on an original SHVC solution. A larger quantity of users in each cell indicates a more obvious relative gain. For example, when each cell includes 12 users, the user satisfaction rate increases from 65.6% when SHVC is not adopted in the method to 72%, with a relative gain of 9.8%, and the user satisfaction rate increases from 33.1% when HEVC is not adopted in the method to 72%, with a relative gain of 72%.

The steps of the data transmission method according to this application are described in the foregoing embodiments. It may be understood that, to implement the foregoing functions, network devices such as a base station or a wireless access point includes a corresponding hardware structure and/or a corresponding software module for performing each function. A person skilled in the art should easily be aware that units and algorithm steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

For example, as a transmit device, a base station and another network device may implement a corresponding function by using a hardware module.

In an embodiment, as shown in FIG. 16, an apparatus for implementing the foregoing behavior of the transmit device includes: a processor 710 and a memory 720. The memory 720 includes a program instruction 721, and when the program instruction 721 is run by the processor 710, the transmit device is enabled to perform the following method steps: calculating an original priority of proportional-fair PF scheduling of a target logical channel, where the target logical channel includes a logical channel on which the transmit device sends target service data to a receiving device; calculating a priority modification factor of the target logical channel based on whether a first packet in a current minimum effective transmission unit METU that is being sent on the target logical channel has left a buffer queue; performing weighting on the original priority of the target logical channel by using the priority modification factor, to obtain a modified priority of the target logical channel; and scheduling the target logical channel based on the modified priority.

The data transmission apparatus according to this embodiment of this application may be used, for example, in a cloud VR service scenario in which HEVC coding is used. The transmit device may perform weighting on the original priority of the target logical channel according to a sending status of the first packet in the METU on the target logical channel, and modify the original priority. In this way, a transmission speed of the current METU is accelerated, time urgency of the current METU transmission is reduced, and integrity of cloud VR data transmission is improved.

In an implementation, when the program instruction 721 is run by the processor 710, the transmit device is enabled to specifically perform the following method steps: determining whether a packet loss occurs in the current METU; and if the packet loss occurs in the current METU, discarding a packet that is not sent in the current METU, and still determining whether a packet loss occurs in a next METU; or if no packet loss occurs in the current METU, calculating, by the transmit device, the original priority. In this way, the transmit device can actively discard, remaining packets that are not sent in the METU when the packet loss already occurs in the current METU sent to the receiving device, thereby reducing invalid data transmission, saving air interface resources, and improving bandwidth utilization.

In an implementation, the target service data includes video data, and the METU includes an image frame of the video data, an independent slice slice of the image frame, or an independent tile tile of the image frame. Therefore, the transmit device may implement transmission scheduling of the cloud VR data at different granularities according to different granularities of METUs.

In an implementation, when the program instruction 721 is run by the processor 710, the transmit device is enabled to specifically perform the following method steps: determining whether the first packet in the current METU has been scheduled; and if the first packet in the current METU is not scheduled, calculating a first-priority modification factor corresponding to the target logical channel when the first packet in the current METU is not scheduled; or if the first packet in the current METU has been scheduled, calculating a second-priority modification factor corresponding to the target logical channel when the first packet in the current METU has been scheduled. Therefore, the transmit device may generate different priority modification factors according to scheduling statuses of the first packet in the current METU, so that different scheduling priorities are used for the target logical channel corresponding to different scheduling statuses of the first packet in the current METU.

In an implementation, when the program instruction 721 is run by the processor 710, the transmit device is enabled to specifically perform the following method steps: calculating a waiting time factor of the current METU, where the waiting time factor is obtained according to the following formula:

$$W = \frac{(t_n - t_{in})}{T}$$

$W$ is the waiting time factor, $t_n$ is a current moment, $t_{in}$ is a moment at which the first packet in the current METU enters a sending buffer of the target logical channel, and $T$ is a delay constraint of air interface transmission between the transmit device and the receiving device; and determining the first-priority modification factor based on the waiting time factor. Therefore, the waiting time factor can reflect time urgency of the current METU transmission. Therefore, the first-priority modification factor may be a modification factor based on time urgency scheduling.

In an implementation, the first-priority factor is monotonically increasing or monotonically non-decreasing relative to the waiting time factor, and the first-priority modification factor is greater than or equal to 1.

In an implementation, when the program instruction 721 is run by the processor 710, the transmit device is enabled to specifically perform the following method steps: calculating a transmission rate of the current METU; calculating a transmission time factor of the current METU, where the transmission time factor is obtained according to the following formula:

$$ R = \frac{(T_w + T_S + C_n/S)}{T} $$

$R$ is the transmission time factor, $T_w$ is transmission waiting time of the current METU, $T_S$ is transmission time of the current METU, $C_n$ is an amount of data that is not transmitted in the current METU, $S$ is the transmission rate of the current METU, and $T$ is a delay constraint of air interface transmission between the transmit device and the receiving device; and determining the second-priority modification factor based on the transmission time factor. Therefore, the transmission time factor can reflect time urgency of the current METU transmission. Therefore, the second-priority modification factor may be a modification factor based on time urgency scheduling.

In an implementation, the second-priority factor is monotonically increasing or monotonically non-decreasing relative to the transmission time factor, and the second-priority modification factor is greater than or equal to 1.

In an implementation, the target service data includes type 1 data and type 2 data, importance of the type 1 data is higher than that of the type 2 data, and the target logical channel includes a logical channel for transmitting the type 1 data and a logical channel for transmitting the type 2 data; and when the program instruction 721 is run by the processor 710, the transmit device is enabled to specifically perform the following method step: multiplying the original priority by the first-priority modification factor or the second-priority modification factor corresponding to the target logical channel, and adding an offset factor, to obtain a modified priority of the logical channel for transmitting the type 1 data. Therefore, the transmit device may set different priorities for different logical channels according to different data importance.

In an implementation, when the program instruction 721 is run by the processor 710, the transmit device is further enabled to perform the following method steps: determining whether the transmission time factor is greater than a preset threshold; and if the transmission time factor is less than or equal to the threshold, multiplying the original priority by the first-priority modification factor or the second-priority modification factor corresponding to the target logical channel, to obtain a modified priority of the logical channel for transmitting the type 2 data. In this way, the transmit device can accelerate transmission of the relatively unimportant data when time urgency of relatively unimportant data transmission is not high, thereby improving integrity of data transmission.

In an implementation, when the program instruction 721 is run by the processor 710, the transmit device is further enabled to perform the following method step: if the transmission time factor is greater than the threshold, discarding a packet that is not transmitted in the current METU. In this way, the transmit device may discard the relatively unimportant data when time urgency of relatively unimportant data transmission is high, thereby improving transmission integrity of the relatively important data.

In addition, as a transmit device, a base station and another network device may implement a corresponding function by using a software module.

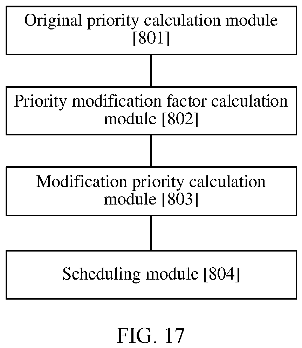

In an embodiment, as shown in FIG. 17, a data transmission apparatus configured to implement the behavior function of the transmit device includes: an original priority calculation module 801, configured to calculate an original priority of proportional-fair PF scheduling of a target logical channel, where the target logical channel includes a logical channel on which the transmit device sends target service data to a receiving device; a priority modification factor calculation module 802, configured to calculate a priority modification factor of the target logical channel based on whether a first packet in a current minimum effective transmission unit METU that is being sent on the target logical channel has left a buffer queue; a modification priority calculation module 803, configured to perform weighting on the original priority of the target logical channel by using the priority modification factor, to obtain a modified priority of the target logical channel; and a scheduling module 804, configured to schedule the target logical channel based on the modified priority.

An embodiment of this application further provides a computer storage medium. The computer storage medium stores a computer instruction. When the computer instruction runs on a computer, the computer is enabled to perform the method in the foregoing aspects.

An embodiment of this application further provides a computer program product including an instruction. When the computer program product runs on a computer, the computer is enabled to perform the method in the foregoing aspects.

This application further provides a chip system. The chip system includes a processor, configured to support the foregoing apparatus or device in implementing functions in the foregoing aspects, for example, generating or processing information in the foregoing method. In a possible design, the chip system further includes a memory, configured to store a program instruction and data that are necessary for the foregoing apparatus or device. The chip system may include a chip, or may include a chip and another discrete component.

The objectives, technical solutions, and beneficial effect of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

**Claims**

1. A data transmission method, comprising:

   calculating, by a transmit device, an original priority of proportional-fair PF scheduling of a target logical channel, wherein the target logical channel comprises a logical channel on which the transmit device sends target service data to a receiving device;
   calculating, by the transmit device, a priority modification factor of the target logical channel based on whether a first packet in a current minimum effective transmission unit METU that is being sent on the target logical channel has left a buffer queue;
   performing weighting, by the transmit device, on the original priority of the target logical channel by using the priority modification factor, to obtain a modified priority of the target logical channel; and
   scheduling, by the transmit device, the target logical channel based on the modified priority.

2. The method according to claim 1, wherein the calculating, by a transmit device, an original priority of proportional-fair PF scheduling of a target logical channel comprises:

   determining, by the transmit device, whether a packet loss occurs in the current METU; and
   if the packet loss occurs in the current METU, discarding, by the transmit device, a packet that is not sent in the current METU, and still determining whether a packet loss occurs in a next METU; or
   if no packet loss occurs in the current METU, calculating, by the transmit device, the original priority.

3. The method according to claim 1 or 2, wherein the target service data comprises video data, and the METU comprises an image frame of the video data, an independent slice slice of the image frame, or an independent tile tile of the image frame.

4. The method according to any one of claims 1 to 3, wherein the calculating, by the transmit device, a priority modification factor of the target logical channel based on whether a first packet in a current METU that is being sent on the target logical channel has left a buffer queue comprises:

   determining, by the transmit device, whether the first packet in the current METU has left the buffer queue; and
   if the first packet in the current METU does not leave the buffer queue, calculating, by the transmit device, a first-priority modification factor corresponding to the target logical channel when the first packet in the current METU does not leave the buffer queue; or
   if the first packet in the current METU has left the buffer queue, calculating, by the transmit device, a second-priority modification factor corresponding to the target logical channel when the first packet in the current METU has left the buffer queue.

5. The method according to claim 4, wherein the calculating, by the transmit device, a first-priority modification factor corresponding to the target logical channel when the first packet in the current METU does not leave the buffer queue comprises:

   calculating, by the transmit device, a waiting time factor of the current METU, wherein the waiting time factor is obtained according to the following formula:

$$W = \frac{(t_n - t_{in})}{T}$$

   $W$ is the waiting time factor, $t_n$ is a current moment, $t_{in}$ is a moment at which the first packet in the current METU enters a sending buffer of the target logical channel, and $T$ is a delay constraint of air interface transmission between the transmit device and the receiving device; and
   determining, by the transmit device, the first-priority modification factor based on the waiting time factor.

6. The method according to claim 5, wherein the first-priority modification factor is monotonically increasing or monotonically non-decreasing relative to the waiting time factor, and the first-priority modification factor is greater than or equal to 1.

7. The method according to claim 4, wherein the calculating, by the transmit device, a second-priority modification factor corresponding to the target logical channel when the first packet in the current METU has left the buffer queue comprises:

calculating, by the transmit device, a transmission rate of the current METU;
calculating, by the transmit device, a transmission time factor of the current METU, wherein the transmission time factor is obtained according to the following formula:

$$R = \frac{(T_W + T_S + C_n/S)}{T}$$

$R$ is the transmission time factor, $T_w$ is transmission waiting time of the current METU, $T_S$ is transmission time of the current METU, $C_n$ is an amount of data that is not transmitted in the current METU, $S$ is the transmission rate of the current METU, and $T$ is a delay constraint of air interface transmission between the transmit device and the receiving device; and
determining, by the transmit device, the second-priority modification factor based on the transmission time factor.

8. The method according to claim 7, wherein the second-priority factor is monotonically increasing or monotonically non-decreasing relative to the transmission time factor, and the second-priority modification factor is greater than or equal to 1.

9. The method according to claim 7 or 8, wherein the target service data comprises type 1 data and type 2 data, importance of the type 1 data is higher than that of the type 2 data, and the target logical channel comprises a logical channel for transmitting the type 1 data and a logical channel for transmitting the type 2 data; and the performing weighting, by the transmit device, on the original priority of the target logical channel by using the priority modification factor, to obtain a modified priority of the target logical channel comprises:
multiplying, by the transmit device, the original priority by the first-priority modification factor or the second-priority modification factor corresponding to the target logical channel, and adding an offset factor, to obtain a modified priority of the logical channel for transmitting the type 1 data.

10. The method according to claim 9, further comprising:

determining, by the transmit device, whether the transmission time factor is greater than a preset threshold; and
if the transmission time factor is less than or equal to the threshold, multiplying, by the transmit device, the original priority by the first-priority modification factor or the second-priority modification factor corresponding to the target logical channel, to obtain a modified priority of the logical channel for transmitting the type 2 data.

11. The method according to claim 10, further comprising:
if the transmission time factor is greater than the threshold, discarding, by the transmit device, a packet that is not transmitted in the current METU.

12. A data transmission apparatus, used as a transmit device, wherein the apparatus comprises a processor and a memory; and the memory comprises a program instruction, and when the program instruction is run by the processor, the transmit device is enabled to perform the following method steps:

calculating an original priority of proportional-fair PF scheduling of a target logical channel, wherein the target logical channel comprises a logical channel on which the transmit device sends target service data to a receiving device;
calculating a priority modification factor of the target logical channel based on whether a first packet in a current minimum effective transmission unit METU that is being sent on the target logical channel has left a buffer queue;
performing weighting on the original priority of the target logical channel by using the priority modification factor, to obtain a modified priority of the target logical channel; and
scheduling the target logical channel based on the modified priority.

13. The apparatus according to claim 12, wherein when the program instruction is run by the processor, the transmit device is enabled to specifically perform the following method steps:

determining whether a packet loss occurs in the current METU; and
if the packet loss occurs in the current METU, discarding a packet that is not sent in the current METU, and still determining whether a packet loss occurs in a next METU; or
if no packet loss occurs in the current METU, calculating, by the transmit device, the original priority.

14. The apparatus according to claim 12 or 13, wherein the target service data comprises video data, and the METU comprises an image frame of the video data, an independent slice slice of the image frame, or an independent tile tile of the image frame.

15. The apparatus according to any one of claims 12 to 14, wherein when the program instruction is run by the processor, the transmit device is enabled to specifically perform the following method steps:

> determining whether the first packet in the current METU has left the buffer queue; and
> if the first packet in the current METU does not leave the buffer queue, calculating a first-priority modification factor corresponding to the target logical channel when the first packet in the current METU does not leave the buffer queue; or
> if the first packet in the current METU has left the buffer queue, calculating a second-priority modification factor corresponding to the target logical channel when the first packet in the current METU has left the buffer queue.

16. The apparatus according to claim 15, wherein when the program instruction is run by the processor, the transmit device is enabled to specifically perform the following method steps:

> calculating a waiting time factor of the current METU, wherein the waiting time factor is obtained according to the following formula:

$$W = \frac{(t_n - t_{in})}{T}$$

> $W$ is the waiting time factor, $t_n$ is a current moment, $t_{in}$ is a moment at which the first packet in the current METU enters a sending buffer of the target logical channel, and $T$ is a delay constraint of air interface transmission between the transmit device and the receiving device; and
> determining the first-priority modification factor based on the waiting time factor.

17. The apparatus according to claim 16, wherein the first-priority factor is monotonically increasing or monotonically non-decreasing relative to the waiting time factor, and the first-priority modification factor is greater than or equal to 1.

18. The apparatus according to claim 15, wherein when the program instruction is run by the processor, the transmit device is enabled to specifically perform the following method steps:

> calculating a transmission rate of the current METU;
> calculating a transmission time factor of the current METU, wherein the transmission time factor is obtained according to the following formula:

$$R = \frac{(T_w + T_S + C_n/S)}{T}$$

> $R$ is the transmission time factor, $T_w$ is transmission waiting time of the current METU, $T_S$ is transmission time of the current METU, $C_n$ is an amount of data that is not transmitted in the current METU, $S$ is the transmission rate of the current METU, and $T$ is a delay constraint of air interface transmission between the transmit device and the receiving device; and
> determining the second-priority modification factor based on the transmission time factor.

19. The apparatus according to claim 18, wherein the second-priority factor is monotonically increasing or monotonically non-decreasing relative to the transmission time factor, and the second-priority modification factor is greater than or equal to 1.

20. The apparatus according to claim 18 or 19, wherein the target service data comprises type 1 data and type 2 data, importance of the type 1 data is higher than that of the type 2 data, and the target logical channel comprises a logical channel for transmitting the type 1 data and a logical channel for transmitting the type 2 data; and when the program instruction is run by the processor, the transmit device is enabled to specifically perform the following method step:
multiplying the original priority by the first-priority modification factor or the second-priority modification factor corresponding to the target logical channel, and adding an offset factor, to obtain a modified priority of the logical channel for transmitting the type 1 data.

21. The apparatus according to claim 20, wherein when the program instruction is run by the processor, the transmit device is further enabled to perform the following method steps:

> determining whether the transmission time factor is greater than a preset threshold; and
> if the transmission time factor is less than or equal to the threshold, multiplying the original priority by the first-priority modification factor or the second-priority modification factor corresponding to the target logical channel, to obtain a modified priority of the logical channel for transmitting the type 2 data.

22. The apparatus according to claim 21, wherein when the program instruction is run by the processor, the transmit device is further enabled to perform the following method step:
if the transmission time factor is greater than the threshold, discarding a packet that is not transmitted

**EP 4 262 310 A1**

in the current METU.

23. A computer storage medium, comprising a computer instruction, and when the computer instruction runs on a network device, the network device is enabled to perform the method according to any one of claims 1 to 11.

24. A computer program product, wherein when the computer program product runs on a computer, the computer is enabled to perform the method according to any one of claims 1 to 11.

FIG. 1

FIG. 2

Second device 200

FIG. 3

Service
server

Transmit
device

METU:
Frame    Slice    Tile

Receiving
device

FIG. 4

Transmit
device

HEVC format coding

Receiving
device

Logical channel (video data)

Transmit
device

SHVC format coding

Receiving
device

Logical channel (BL data)

Logical channel (EL data)

FIG. 5

FIG. 6

```
                                              ┌──────────┐
                                      ┌───────▶│  Start   │
                                      │        └────┬─────┘
                      S102            │             │
   ┌──────────────────────────┐      │            ▼              S101
   │ The transmit device      │ Yes  │      ╱────────────────╲
   │ discards a packet that   │◀─────┼─────╱  A transmit device╲
   │ is not sent in the       │            ╲  determines        ╱
   │ current METU             │             ╲ whether a packet ╱
   └──────────────────────────┘              ╲ loss occurs in ╱
                                              ╲a current METU ╱
                                               ╲sent on a    ╱
                                                ╲target     ╱
                                                 ╲logical  ╱
                                                  ╲channel╱
                                                   ╲─┬──╱
                                                     │  No        S103
                                                     ▼
                                       ┌──────────────────────────┐
                                       │ The transmit device      │
                                       │ calculates an original   │
                                       │ priority of PF scheduling│
                                       │ of the target logical    │
                                       │ channel                  │
                                       └────────────┬─────────────┘
                                                    ▼             S104
                                       ┌──────────────────────────┐
                                       │ The transmit device      │
                                       │ calculates a priority    │
                                       │ modification factor of   │
                                       │ the target logical       │
                                       │ channel based on whether │
                                       │ a first packet in the    │
                                       │ current METU is scheduled│
                                       └────────────┬─────────────┘
                                                    ▼             S105
                                       ┌──────────────────────────┐
                                       │ The transmit device      │
                                       │ performs weighting on    │
                                       │ the original priority by │
                                       │ using the priority       │
                                       │ modification factor, to  │
                                       │ obtain a modified        │
                                       │ priority of the target   │
                                       │ logical channel          │
                                       └────────────┬─────────────┘
                                                    ▼             S106
                                       ┌──────────────────────────┐
                                       │ The transmit device      │
                                       │ schedules the target     │
                                       │ logical channel based on │
                                       │ the modified priority    │
                                       └────────────┬─────────────┘
                                                    ▼
                                              ┌──────────┐
                                              │   End    │
                                              └──────────┘
```

FIG. 7

First packet

PDCP buffer

Enter

Wait and then schedule:

First packet

PDCP buffer

⊗ Wait

First packet

PDCP buffer

Transmit

First packet

PDCP buffer

Enter

Schedule immediately:

First packet

PDCP buffer

Transmit

FIG. 8

S103

A transmit device calculates an original priority of PF scheduling of a target logical channel

S104

S201

No — The transmit device determines whether a first packet in a current METU is scheduled — Yes

S202

The transmit device calculates a first-priority modification factor corresponding to the target logical channel when the current METU is not scheduled

S203

The transmit device calculates a second-priority modification factor corresponding to the target logical channel when the current METU has been scheduled

S105

The transmit device performs weighting on the original priority by using the priority modification factor, to obtain a modified priority of the target logical channel

FIG. 9

$$f_1(W) = \begin{cases} 1, W \le 0.2 \\ 5W, 0.2 < W \le 0.8 \\ 4, W > 0.8 \end{cases}$$

FIG. 10

FIG. 11

$$f_2(R) = \begin{cases} 1, R \le 0.5 \\ R/(1-R), 0.5 < R \le 0.8 \\ 4, R > 0.8 \end{cases}$$

FIG. 12

User satisfaction rate VS Quantity of users in each cell

FIG. 13

Start

S502

The transmit device discards a packet that is not sent in the current METU

Yes

S501

A transmit device determines whether a packet loss occurs in a current METU sent on a target logical channel

No

S503

The transmit device calculates an original priority of PF scheduling of the target logical channel

S504

The transmit device calculates a priority modification factor of the target logical channel based on whether a first packet in the current METU is scheduled

TO FIG. 14B

FIG. 14A

CONT. FROM
FIG. 14A

S505

S602

The transmit device determines that a modified priority of the target logical channel is an offset coefficient Offset plus a product of the original priority $PF_0$ and the priority modification factor Factor

No ←

S601

The transmit device determines whether the target logical channel is a logical channel for transmitting EL data

Yes ↓

S603

The transmit device determines whether a transmission time factor of the current METU is greater than a preset threshold

Yes →

S605

The transmit device discards a packet that is not transmitted in the current METU

No ↓

S604

The transmit device determines that a modified priority of the target logical channel is a product of the original priority $PF_0$ and the priority modification factor Factor

↓ S506

The transmit device schedules the target logical channel based on the modified priority

End

FIG. 14B

## User satisfaction rate VS Quantity of users in each cell

—●— HEVC   ···▲··· SHVC   —■— SHVC + Embodiment 2

FIG. 15

FIG. 16

Original priority calculation module
[801]

Priority modification factor calculation
module [802]

Modification priority calculation
module [803]

Scheduling module [804]

FIG. 17

## INTERNATIONAL SEARCH REPORT

| International application No. |
| --- |
| **PCT/CN2020/140905** |

| **A.** | **CLASSIFICATION OF SUBJECT MATTER** |
| --- | --- |

H04W 72/10(2009.01)i

According to International Patent Classification (IPC) or to both national classification and IPC

| **B.** | **FIELDS SEARCHED** |
| --- | --- |

Minimum documentation searched (classification system followed by classification symbols)

H04L; H04W; H04Q

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 虚拟现实, 云化, 目标逻辑信道, 比例公平, 调度, 原始, 优先级, 最小有效传输单元, 首个, 数据包, 缓存, 队列, 修正系数, 加权; Cloud VR, cloud virtual reality, METU, target logical channel, proportional fairness, scheduling, originality, priority, minimum effective transmission unit, first, data packet, buffer, queue, correction coefficient, weight

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | CN 106507488 A (CHINA UNITED NETWORK COMMUNICATIONS GROUP CO., LTD.) 15 March 2017 (2017-03-15)<br>description, pages 1-3 | 1-24 |
| A | US 2013094356 A1 (KEITH, Seth et al.) 18 April 2013 (2013-04-18)<br>entire document | 1-24 |
| A | HUAWEI et al. "Overview of coverage enhancement: scenarios, channels, services and potential solutions"<br>*3GPP TSG RAN WG1 Meeting #101-e R1-2004155*, 05 June 2020 (2020-06-05),<br>chapter 2 | 1-24 |
| A | CN 103873189 A (LENOVO (BEIJING) LIMITED) 18 June 2014 (2014-06-18)<br>entire document | 1-24 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 September 2021** | **29 September 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

| International application No. |
| --- |
| **PCT/CN2020/140905** |

| Patent document cited in search report | | | Publication date (day/month/year) | Patent family member(s) | | | Publication date (day/month/year) |
| --- | --- | --- | --- | --- | --- | --- | --- |
| CN | 106507488 | A | 15 March 2017 | None | | | |
| US | 2013094356 | A1 | 18 April 2013 | US | 2013077486 | A1 | 28 March 2013 |
| CN | 103873189 | A | 18 June 2014 | None | | | |

Form PCT/ISA/210 (patent family annex) (January 2015)